(19) Europäisches Patentamt
European Patent Office
Office européen des brevets

(11) **EP 3 855 853 A1**

(12) **EUROPEAN PATENT APPLICATION**

(43) Date of publication:
**28.07.2021 Bulletin 2021/30**

(51) Int Cl.:
*H04W 74/08* (2009.01)      *H04B 3/54* (2006.01)

(21) Application number: **20153926.9**

(22) Date of filing: **27.01.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Renesas Electronics Corporation 135-0061 Tokyo (JP)**

(72) Inventors:
• **JONES, Kevin**
 **Bourne End, Buckinghamshire SL8 5FH (GB)**

• **HUESKE, Klaus**
 **40472 Duesseldorf (DE)**
• **YAMAMOTO, So**
 **Tokyo 186-8588 (JP)**

(74) Representative: **Piotrowicz, Pawel Jan Andrzej et al**
 **Venner Shipley LLP**
 **Byron House**
 **Cambridge Business Park**
 **Cowley Road**
 **Cambridge CB4 0WZ (GB)**

(54) **CSMA WITH RANDOM BACK-OFF**

(57) A method of CSMA with random back-off is described. The method comprises determining a set of CSMA parameters dynamically in dependence a number of nodes, n, in a network in which a channel is accessed by CSMA with random back-off, and performing CSMA with random back-off using the set of CSMA parameters.

Fig. 6

EP 3 855 853 A1

## Description

### Field

The present invention relates to CSMA with random back-off, particularly but not exclusively to CSMA/CA with random back-off.

### Background

The 3rd Generation Power Line Communication (G3-PLC) is an open standard covering OSI Layer 1 (*i.e.*, the Physical Layer) and Layer 2 (*i.e.*, the Data Link Layer) operation in a power line communication (PLC) network. G3-PLC specifies, among other things, how devices (which may also be referred to as "nodes", "stations" or "transceivers") should access a communication channel.

G3-PLC employs a carrier sense multiple access with collision avoidance (CSMA/CA) with a random back-off time algorithm (herein referred to simply as the "CSMA/CA algorithm"). The CSMA/CA algorithm helps devices to share the channel, while trying to avoid collisions between different devices.

Random back-off is used to spread the time over which devices attempt to transmit and so reduce the probability of collision. Each time a node wishes to transmit a data frame, it waits for a contention period and then waits for a random back-off interval which ends at a randomly selected point within a so-called contention window. If the node finds that the channel is idle after the back-off interval, then it transmits the frame. If, however, the node finds that the channel is busy, then it waits for the next contention period and waits for another newly-computed back-off interval before trying to access the channel again. The CSMA algorithm seeks to increase (if necessary, to a maximum) the contention window, thereby increasing the range of possible back-off intervals, so that the chance of a further collision is again reduced. Details of CSMA/CA algorithm can be found in clause 9.3.1 of ITU-T Recommendation G.9903 (08/2017) "Narrowband orthogonal frequency division multiplexing power line communication transceivers for G3-PLC networks" which is incorporated herein by reference.

### Summary

According to a first aspect of the present invention there is provided a method comprising determining values for a set of CSMA parameters in dependence on a number of nodes in a network in which a channel is accessed by CSMA, and performing CSMA with random back-off using the CSMA parameters.

The channel is preferably accessed by CSMA/CA and performing CSMA with random back-off using the CSMA parameters preferably comprises performing CSMA/CA with random back-off using the CSMA parameters. The channel may be accessed by CSMA/CD and performing CSMA with random back-off using the CSMA parameters may comprise performing CSMA/CD with random back-off using the CSMA parameters

Determining the set of CSMA parameters may comprise adjusting CSMA parameters so as to increase a contention window as the number of nodes increases and decrease the contention window as the number of nodes decreases.

The set of CSMA parameters may include a first parameter defining a maximum value of an upper limit to a contention window, for example, macMaxBE, and/or a second parameter defining a minimum value of the upper limit to the contention window, for example, macMinBE. The set of CSMA parameters are a sub-set of a full set of CSMA parameters.

The method may further comprise setting values for a further set of CSMA parameters to minimise changes in contention window size.

The further set of CSMA parameters (*i.e.*, different CSMA parameters) may include a third parameter defining a rate of decrease in size of a contention window, for example, macA, and/or a fourth parameter defining a number of consecutive attempts to access the channel using a minimum value of the upper limit to the contention window, for example, macMinCWAttempts.

The number of nodes is obtained from node information table(s). The node information table may be a personal operating space table and/or a neighbour table. The node information is preferably stored in storage in the node.

The method is preferably implemented in the media access control (MAC) layer.

According to a second aspect of the present invention there is provided a method of channel access in a wired communication system using the method of the first aspect.

The wired communication system is a power line communications network, such as a G3-PLC compliant network or PRIME compliant network.

According to a third aspect of the present invention there is provided a method of channel access in a wireless communication system using the method of the first aspect.

The wireless communication system may comply with IEEE 802.15.4. The wireless communication system may be a personal area network, such as ZigBee (RTM).

According to a fourth aspect of the present invention is provided a computer program comprising instructions for performing the method.

According to a fifth aspect of the present invention is provided a computer program product comprising a computer readable medium (which may be non-transitory) storing the computer program.

According to a sixth aspect of the present invention is provided a hardware logic configured to perform the method.

According to a seventh aspect of the present invention there is provided a device comprising a first processor configured to determine a set of CSMA parameters dynamically in dependence on a number of nodes in a network in which a channel is accessed by CSMA and a second processor configured to perform CSMA with back-off using the set of CSMA parameters. The channel may be accessed by CSMA/CA and the second processor may be configured to perform CSMA/CA with back-off using the set of CSMA parameters.

The device may be a MAC controller.

According to an eight aspect of the present invention there is provided an integrated circuit comprising the device of the seventh aspect. The integrated circuit may be a microcontroller. The integrated circuit may further comprise a PHY controller.

According to a ninth aspect of the present invention there is provided a wired or wireless communication node comprising the integrated circuit of the eighth aspect of the present invention.

The node may further comprise a host microcontroller in operative communication with the integrated circuit.

**Brief Description of the Drawings**

Certain embodiments of the present invention will now be described, by way of example, with reference to the accompanying drawings, in which:

Figure 1 schematically illustrates CSMA/CA;
Figure 2 is a plot of calculated contention window size as a function of number of attempts for a continually-busy channel;
Figure 3 is a plot of calculated contention window size as a function of number of attempts for a channel which is initially busy for the first five attempts after which it is continually free;
Figure 4 schematically illustrates a power line communications network including a plurality of nodes in which CSMA parameters are dynamically adjusted;
Figure 5 is a schematic block diagram of a node in a power line communications network shown in Figure 4;
Figure 6 is schematic block diagram of a MAC controller in the node shown in Figure 5;
Figure 7 illustrates a look-up table comprising a set of CSMA parameters which depend on a number of nodes in a network;
Figure 8 is an example of the look-up table shown in Figure 7 with illustrative values;
Figure 9 illustrates a process of providing CSMA parameters which depend on a number of nodes in a network; and
Figure 10 schematically illustrates a wireless communications network including a plurality of nodes in which CSMA parameters are dynamically adjusted.

**Detailed Description of Certain Embodiments**

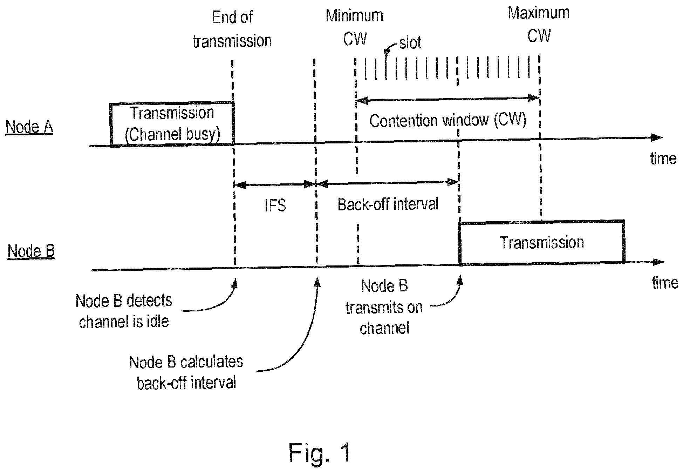

Referring to Figure 1, in CSMA/CA used in G3-PLC, random back-off is used to spread the time over which devices attempt to transmit and so reduce the probability of collision. Each time a node (in this case, Node B) wishes to transmit, it waits for a contention period and then waits for a random back-off interval. If the node finds that the channel is idle after the back-off interval, then it transmits data. If, however, the node finds that the channel is busy, it waits for the next contention period and waits for another newly-computed back-off interval before trying to access the channel again.

The CSMA/CA algorithm operates in units of back-off periods, where one back-off period equals aUnitBackoffPeriod symbol which is equal to a slot duration, aSlotTime.

The back-off interval is chosen from within a contention window, CW, having a variable duration. When a device accesses the channel for the first time, it sets CW to be $2^{macMinBE}$, where macMinBE (default) = 3. For every channel access failure, the value of CW doubles, thereby doubling the duration of the contention window. However, the maximum value of CW is limited to $2^{macMaxBE}$, where macMaxBE (default) = 8. If the device successfully accesses the channel, then the value of CW is set to the maximum of the previous value of CW minus either (macA $\times$ $2^{macMinBE}$) or $2^{macMinBE}$, whichever is higher, where macA (default) = 8.

Taking transmissions in the CENELEC-A band as an example in which transmission slots have a duration, aSlotTime, of approximately 1.4ms, the back off time can be expressed as:

$$\text{Backoff Time} = \text{Random(CW)} \times 1.4 \text{ ms}$$

For the default parameters given hereinbefore, assuming a truly random distribution and assuming a sufficiently high number of frames are transmitted, then Random(CW) can be normalised to $0.5 \times CW$ and so Backoff Time can be approximated to:

$$\text{Backoff Time} = 0.5 \times \text{CW} \times 1.4 \text{ ms}$$

If the initial value of CW is $2^{macMinBE}$, then for a contention window of 8 slots the normalised Backoff Time is 5.6 ms.

For a blocked channel, the maximum value of normalised Backoff Time is 179.2 ms, i.e., when there is a contention window of 256 slots. Thus, it is clear when collisions occur, the interframe timing increases considerably

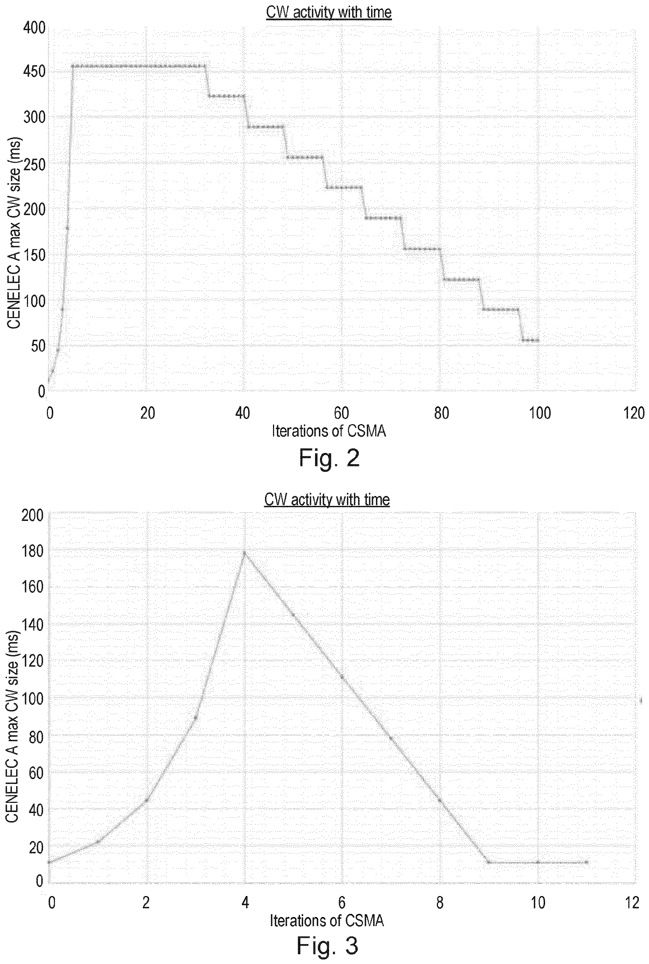

Figure 2 is a plot of calculated contention window size as a function of the number of iterations of the CSMA/CA algorithm in the G3-PLC specification for a continually-busy channel. As shown in Figure 2, the maximum contention window time quickly increases within five failed attempts to reach the maximum contention window size.

Figure 3 is a plot of calculated contention window size as a function of the number of iterations of the CSMA/CA algorithm in the G3-PLC specification for a channel is a continually busy channel for 5 attempts after which it is continually free. Again, the contention window quickly rises to the maximum value. However, as soon as the device successfully accesses the channel, the contention window quickly returns to the minimum contention state, in this case, within five successful channel accesses. This is due to the algorithm which, following a successful channel access, reduces the contention window size by macA $\times$ $2^{macMinBE}$, i.e., or $8 \times 2^3 = 64$ slots. If the maximum contention window is $2^{macMaxBE}$, i.e., 256, then reducing the contention window by 64 slots after each successful channel access will result in a minimum contention size after four channel accesses.

If macA is reduced, then this would reduce the slope of the contention window size falling. Reducing $2^{macMinBE}$ would also have the same effect, but this in turn would reduce the minimum size of the smallest contention window which could lead to more collisions.

In addition to the three parameters hereinbefore (namely macMinBE, macMaxBE and macA), the CSMA/CA algorithm uses four further parameters, namely macMinCWAttempts, macMaxCSMABackoffs, macCSMAFairnessLimit and macK.

The macMinCWAttempts parameter sets a number of consecutive attempts while using minimum CW, and macMinCWAttempts (default) = 10. It means that after ten successful channel accessesat the lowest contention window size, the contention window size is forced to $2^{macMaxBE}$, the maximum size.

The macMaxCSMABackoffs parameter is the maximum number of back-off attempts before the resulting channel access is considered failed and the frame is dropped, and macMaxCSMABackoffs (default) = 50.

The macCSMAFairnessLimit parameter specifies after how many failed back-off attempts the back-off exponent is set to macMaxBE, and macCSMAFairnessLimit = 25. This is imposed to allow nodes with maximum contention window size to slowly decrease the contention window, once the device has failed 25 times and it is a multiple of macK (whose default value is 5), then the contention window is reduced by macA $\times$ $2^{macMinBE}$. In all other cases, the CW value remains unchanged. macCSMAFairnessLimit is used to avoid always using the maximum CW.

As the density of the network increases, for example, for 300 nodes or more, there is a high chance of collisions. If macMinBE is increased, then the chance of collisions reduces, but the throughput of the network will decrease as the random time between frames will increase. If macMaxBE is increased, then, when collisions occur, the contention can be increased considerably so that the chance of further collisions is reduced. If there are too many successful channel accesses with the minimum contention, then the maximum will be set.

The contention window decreases by macA $\times$ $2^{macMinBE}$ and is bounded by $2^{macMinBE}$ and $2^{macMaxBE}$ at the lower and upper ends, respectively. The invention is based on the insight that if the bounds of the contention window are set appropriately, then macCSMAFairnessLimit, macMaxCSMABackoffs and macK should not be factors in the CSMA algorithm and so devices will be accessing the channel fairly on a regular basis. Thus, it should not be necessary to force nodes to use the maximum contention size or, if so forced, to force them to do so rarely.

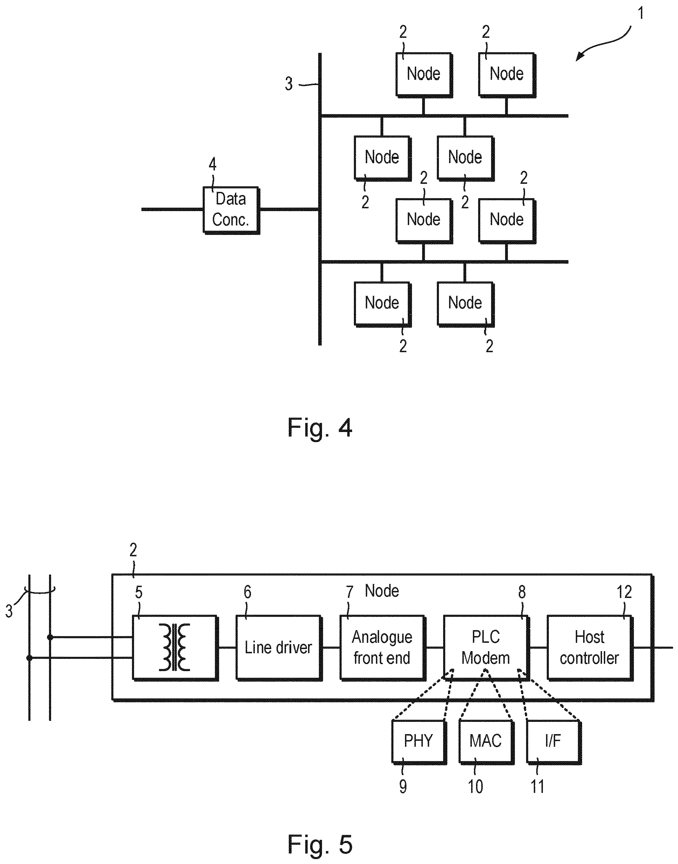

Referring to Figure 4, a power line communication network 1 is shown. The network 1 may form part of advanced metering infrastructure (AMI). The network 1 is a G3-PLC compliant network. It may, however, comply with other specifications, such as PRIME.

The network 1 includes a plurality of nodes 2 connected to power lines 3 (or "electrical wiring"), for example, in the form of a low-voltage distribution network for delivering power to domestic premises, and data concentrator(s) 4. The power lines 3 provide the medium for communication channels between nodes 2 and between nodes 2 and the data concentrator.

Referring to Figure 5, a node 2 includes an optional coupling transformer 5, a line driver 6, an analogue front end 7, a modem 8 which includes a physical layer (PHY) controller 9, a media access control (MAC) controller 10, a host interface 11 and, optionally, other parts of the G3-PLC stack (or equivalent) such as the adaptation layer (ADP), and a host microcontroller 12. The modem 8 may take the form of a microcontroller and may include a processor (not shown) for implementing the MAC controller 10.

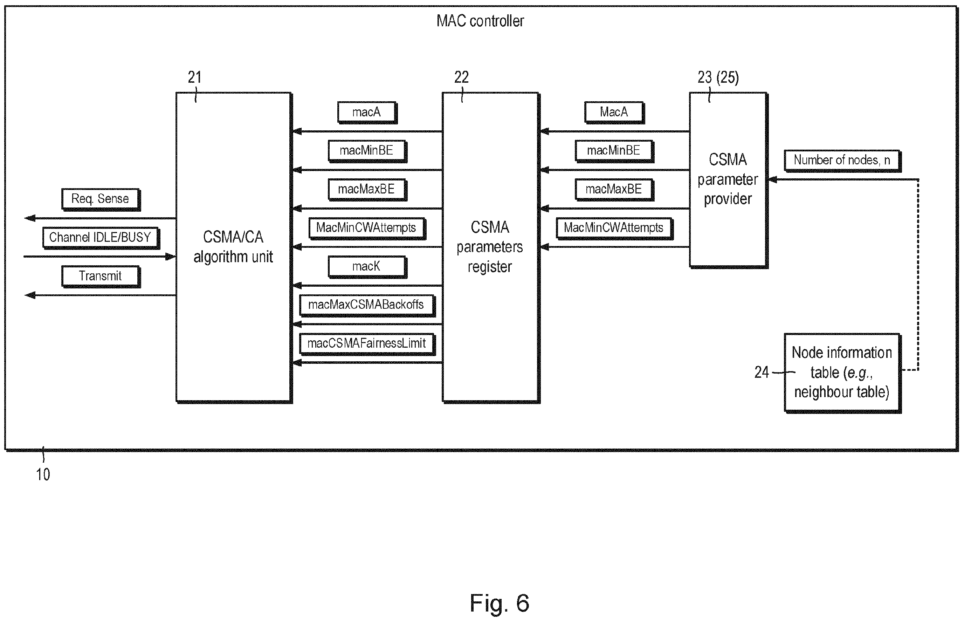

Referring to Figure 6, the MAC controller 10 is shown in more detail.

The MAC controller 10 includes a CSMA/CA processor 21 for performing the CSMA/CA algorithm. The MAC controller 10 also includes a register 22 which holds values of CSMA parameters. The CSMA/CA processor 10 may take the form of a finite-state machine implemented in hardware logic or in software.

The MAC controller 10 includes a CSMA parameter processor 23 for dynamically providing values of some of the CSMA parameters, namely macMinBE and macMaxBE, depending on a number, n, of nodes 2 accessing the network. Values for other parameters, namely macA and/or macMinCWAttempts, may be set to help minimise changes in contention window size.

The number, n, of nodes 2 can be based on a table 24 holding information about the nodes, for example, in the case of G3-PLC, in the form of a personal operation space (POS) table and/or a neighbour table (NT), which is stored in the MAC controller 10. The table 10 may, however, be stored in the node 2 outside the MAC controller 10. Alternatively, the node number n can be signalled to the node 2 from an external source or even assumed, for example, according to a time of day and/or day.

The node number n can be taken to be the number of entries in a table or inferred some other way from the size of the table. The number n may take the form of a tidemark whereby if the number increases to a high number and then drops again, then the higher number is remembered. The value n may be, for example, a maximum number of valid table entries (e.g., valid POS table entries). The number n used may be updated periodically and/or updated triggered in response to a predefined change in the table, *e.g.* in response to the number increasing by 10 or more entries or if it falls below a predefined number.

The CSMA parameter processor 23 may take the form of a look-up table or a calculator. The CSMA parameter processor 23 may be implemented in hardware logic or in software.

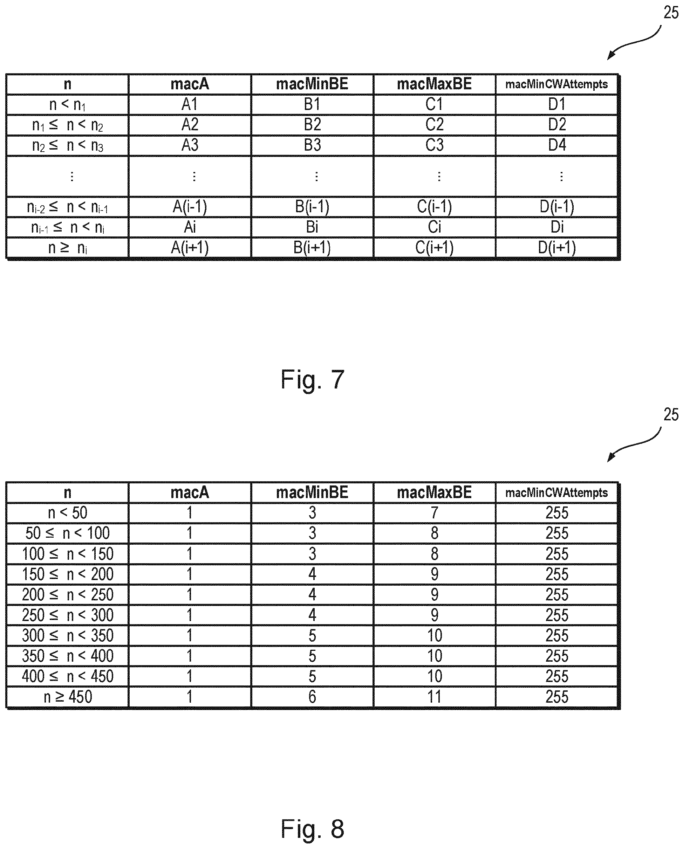

Referring to Figure 7, a look-up table 25 is shown.

The table 25 includes a series of entries based on the number of nodes. Each entry includes range or interval of node numbers, e.g., $n \leq n_1$, $n_1 \leq n < n_2$, $n_2 \leq n < n_3$, ..., $n_{i-2} \leq n < n_{i-1}$, $n_{i-1} \leq n < n_i$ and $n \geq n_{i+1}$ and a corresponding set of parameter values for macMinBE and macMaxBE, and optionally macA and/or macMinCWAttempts, namely A, B, C and D respectively. The intervals can, but need not be, equal in size.

Referring to Figure 8, an example of the look-up table $23_1$ containing ranges and parameter values for illustrative purposes is shown.

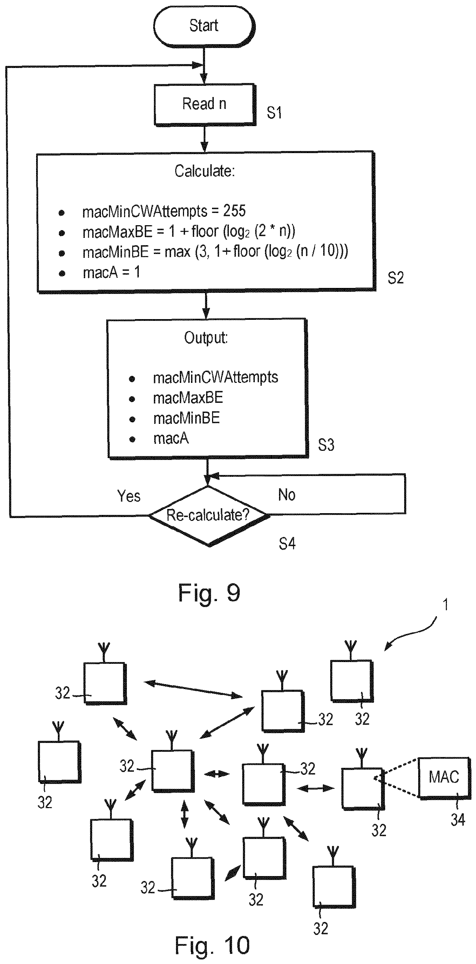

Referring to Figure 9, a calculator may compute the CSMA parameter values using an algorithm. The calculator may continually monitor the number of valid POS table entries and save this limit. It can then update the parameters over a longer period the limit will also reduce such that the limit is dynamic.

The calculator reads a value of n (step Si), calculates the CSMA parameters (step S2) and provides the CSMA parameters to the CSMA register 23 (step S3).

In this case, the parameters are found using a set of equations, namely:

$$macA = A$$

$$macMaxBE = 1 + floor(log2(2 * n))$$

$$macMinBE = max(3, 1 + floor(log2(n / 10)))$$

$$macMinCWAttempts = D$$

In this case, A is a constant equal to 1 and D is a constant equal to 255. As explained earlier, these values are chosen to minimise changes in contention window size. The respective values of these two parameters are fixed to non-default values and do not change according to the number of nodes.

Other equations may be used.

The calculator then waits a predefined period of time or for a trigger before repeating the process (step S4).

The approach can be used in other non-PLC wired or wireless networks which employ CSMA/CA. For example, these include wireless networks complying with IEEE 802.15.4 such as ZigBee (RTM).

Referring to Figure 10, a wireless network 31 of nodes 32 interconnected by wireless links 33 is shown. The wireless network 31 may take the form of a personal wireless network such as ZigBee (RTM).

The nodes 32 include MAC controllers 34 which implement a CSMA/CA algorithm which operates using dynamically updated CSMA parameters in substantially the same way as hereinbefore described.

Modifications

It will be appreciated that various modifications may be made to the embodiments hereinbefore described. Such modifications may involve equivalent and other features which are already known in the design, manufacture and use of powerline communication devices and networks and component parts thereof and which may be used instead of or in addition to features already described herein. Features of one embodiment may be replaced or supplemented by features of another embodiment.

For example, the PHY 8 and MAC 9 may be implemented in different chips.

CSMA/CD may be used.

Although claims have been formulated in this application to particular combinations of features, it should be understood that the scope of the disclosure of the present invention also includes any novel features or any novel combination of features disclosed herein either explicitly or implicitly or any generalization thereof, whether or not it relates to the same invention as presently claimed in any claim and whether or not it mitigates any or all of the same technical problems as does the present invention. The applicants hereby give notice that new claims may be formulated to such features and/or combinations of such features during the prosecution of the present application or of any further application derived therefrom.

**Claims**

1. A method, comprising:

   determining values for a set of CSMA parameters in dependence on a number of nodes in a network in which a channel is accessed by CSMA; and
   performing CSMA with random back-off using the CSMA parameters.

2. The method of claim 1, wherein determining the set of CSMA parameters comprises:
   adjusting CSMA parameters so as to increase a contention window as the number of nodes increases and decrease the contention window as the number of nodes decreases.

3. The method of claim 1 or 2, wherein the set of CSMA parameters include:

   • a first parameter defining a maximum value of an upper limit to a contention window.

4. The method of any one of claims 1 to 3, wherein the set of CSMA parameters include:

   • a second parameter defining a minimum value of the upper limit to the contention window.

5. The method of any one claims 1 to 4, further comprising:
   setting values for a further set of CSMA parameters to minimise changes in contention window size.

6. The method of claim 5, wherein the further set of CSMA parameters include:

   • a third parameter defining a rate of decrease in size of a contention window.

7. The method of claim 5, wherein the further set of CSMA parameters include:

   • a fourth parameter defining a number of consecutive attempts to access the channel using a minimum value of the upper limit to the contention window.

8. The method of any one of claims 1 to 7, wherein the number of nodes is obtained from a node information table.

9. A method of channel access in a wired communication system using the method of any one of claims 1 to 8.

10. The method of claim 9, wherein the wired communication system is a power line communications network.

11. A method of channel access in a wireless communication system using the method of any one of claims 1 to 8.

12. The method of claim 11, wherein the wireless communication system complies with IEEE 802.15.4.

13. A device comprising:

   a first processor configured to determine a set of CSMA parameters dynamically in dependence on a number of nodes in a network in which a channel is accessed by CSMA; and
   a second processor configured to perform CSMA/CA with random back-off using the set of CSMA parameters.

14. An integrated circuit comprising the device of claim 13.

15. A wired or wireless communication node comprising the integrated circuit of claim 14.

Fig. 1

Fig. 2

Fig. 3

Fig. 4

Fig. 5

Fig. 6

EP 3 855 853 A1

25

| n | macA | macMinBE | macMaxBE | macMinCWAttempts |
|---|------|----------|----------|------------------|
| $n < n_1$ | A1 | B1 | C1 | D1 |
| $n_1 \leq n < n_2$ | A2 | B2 | C2 | D2 |
| $n_2 \leq n < n_3$ | A3 | B3 | C3 | D4 |
| $\vdots$ | $\vdots$ | $\vdots$ | $\vdots$ | $\vdots$ |
| $n_{i-2} \leq n < n_{i-1}$ | A(i-1) | B(i-1) | C(i-1) | D(i-1) |
| $n_{i-1} \leq n < n_i$ | Ai | Bi | Ci | Di |
| $n \geq n_i$ | A(i+1) | B(i+1) | C(i+1) | D(i+1) |

## Fig. 7

25

| n | macA | macMinBE | macMaxBE | macMinCWAttempts |
|---|------|----------|----------|------------------|
| $n < 50$ | 1 | 3 | 7 | 255 |
| $50 \leq n < 100$ | 1 | 3 | 8 | 255 |
| $100 \leq n < 150$ | 1 | 3 | 8 | 255 |
| $150 \leq n < 200$ | 1 | 4 | 9 | 255 |
| $200 \leq n < 250$ | 1 | 4 | 9 | 255 |
| $250 \leq n < 300$ | 1 | 4 | 9 | 255 |
| $300 \leq n < 350$ | 1 | 5 | 10 | 255 |
| $350 \leq n < 400$ | 1 | 5 | 10 | 255 |
| $400 \leq n < 450$ | 1 | 5 | 10 | 255 |
| $n \geq 450$ | 1 | 6 | 11 | 255 |

## Fig. 8

Fig. 9

Fig. 10

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/163216 A1 (PARK HYUN-GU [KR] ET AL) 28 June 2012 (2012-06-28) | 1,2, 11-13 | INV. H04W74/08 |
| Y | * paragraphs [0025] - [0053] * <br> * figures 3,4 * | 3-10,14, 15 | H04B3/54 |
| Y,D | "ITU-T Narrowband orthogonal frequency division multiplexing power line communication transceivers for G3-PLC networks G.9903", SERIES G: TRANSMISSION SYSTEMS AND MEDIA, DIGITAL SYSTEMS AND NETWORKS: Access networks - In premises networks, 1 February 2014 (2014-02-01), pages 1-226, XP55257033, Retrieved from the Internet: URL:https://www.itu.int/rec/dologin_pub.as p?lang=e&id=T-REC-G.9903-201402-I!!PDF-E&t ype=items [retrieved on 2016-03-10] * section 9.3.1.3 * | 3-7,9,10 | |
| Y | US 2017/171886 A1 (NABETANI TOSHIHISA [JP] ET AL) 15 June 2017 (2017-06-15) * paragraph [0080] * * figure 4 * | 8 | TECHNICAL FIELDS SEARCHED (IPC) <br> H04W <br> H04B |
| Y | US 2014/307658 A1 (VEDANTHAM RAMANUJA [US] ET AL) 16 October 2014 (2014-10-16) * paragraphs [0003] - [0012], [0024] - [0079] * * figures 6,7 * | 14,15 | |

The present search report has been drawn up for all claims

| Place of search | Date of completion of the search | Examiner |
|---|---|---|
| The Hague | 1 July 2020 | Goedhart, André |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 15 3926

This annex lists the patent family members relating to the patent documents cited in the above-mentioned European search report.
The members are as contained in the European Patent Office EDP file on
The European Patent Office is in no way liable for these particulars which are merely given for the purpose of information.

01-07-2020

| Patent document cited in search report | | | Publication date | Patent family member(s) | | | Publication date |
|---|---|---|---|---|---|---|---|
| US 2012163216 | A1 | | 28-06-2012 | KR | 20120071144 | A | 02-07-2012 |
| | | | | US | 2012163216 | A1 | 28-06-2012 |
| US 2017171886 | A1 | | 15-06-2017 | CN | 106797661 | A | 31-05-2017 |
| | | | | EP | 3223571 | A1 | 27-09-2017 |
| | | | | JP | 6408605 | B2 | 17-10-2018 |
| | | | | JP | WO2016080335 | A1 | 24-08-2017 |
| | | | | US | 2017171886 | A1 | 15-06-2017 |
| | | | | WO | 2016080335 | A1 | 26-05-2016 |
| US 2014307658 | A1 | | 16-10-2014 | US | 2014307658 | A1 | 16-10-2014 |
| | | | | US | 2016080169 | A1 | 17-03-2016 |
| | | | | US | 2017063572 | A1 | 02-03-2017 |

EPO FORM P0459

For more details about this annex : see Official Journal of the European Patent Office, No. 12/82